Europäisches Patentamt

European Patent Office

Office européen des brevets

(11) Publication number : **0 467 551 A2**

# EUROPEAN PATENT APPLICATION

(21) Application number : **91305994.5**

(22) Date of filing : **02.07.91**

(51) Int. Cl.$^5$ : **C08J 9/18**, C08J 3/00,
C08J 9/12, C08J 9/22,
A47G 19/22

(30) Priority : **02.07.90 US 546955**

(43) Date of publication of application :
**22.01.92 Bulletin 92/04**

(84) Designated Contracting States :
**BE DE ES FR GB IT NL**

(71) Applicant : **ARCO CHEMICAL TECHNOLOGY INC.**
**3 Christina Centre Suite 902 201 N Walnut Street**
**Wilmington Delaware 19801 (US)**

(72) Inventor : **Meyer, Bernard H.**
**31 Newtown Square Road**
**Newtown Square, Pennsylvania 19073 (US)**
Inventor : **Kinslow, Joseph C.**
**406 Gayley Street, Apt. B408**
**Media, Pennsylvania 19063 (US)**

(74) Representative : **Cropp, John Anthony David et al**
**MATHYS & SQUIRE 10 Fleet Street**
**London, EC4Y 1AY (GB)**

(54) **Purification, impregnation and foaming of polymer particles.**

(57)  Foamed polymer moldings which have reduced levels of low molecular weight materials and which may also be substantially free of residual blowing agent or halogenated hydrocarbons are obtained by continuously extracting polymer particles in a pressure vessel with a fluid at liquid or supercritical conditions to remove low molecular weight compounds while impregnating said particles with the extracting fluid ; pre-expanding the purified, impregnated polymer particles recovered from the pressure vessel and molding the pre-expanded particles. In a preferred embodiment, the pre-expanded particles are reimpregnated with a pneumatogen such as solid $CO_2$, air or nitrogen, prior to molding.

EP 0 467 551 A2

## BACKGROUNG OF THE INVENTION

The present invention is directed to a method of impregnating and purifying polymers (which term, as used herein, also includes copolymers and mixtures of polymers) with carbon dioxide or other pneumatogens.

The preparation of molded foamed plastic articles is well known wherein plastic particles are impregnated with organic blowing agents, expanded to preliminary low density particles, referred to as pre-expanded particles or pre-puff, placed into a mold and finally expanded in the mold to form the desired fully expanded article. The most used organic blowing agent is n-pentane. Unfortunately, n-pentane is now considered to be environmentally undesirable in certain geographical areas in the quantities which are removed during expansion and molding. Also, although chlorofluorocarbons are satisfactory blowing agents, these materials are undesirable because they are believed to be harmful to the earth's upper ozone layer.

To eliminate this problem, various inert blowing agents such as carbon dioxide, nitrogen, air and other pneumatogens have been tried.

U.S. Patent 2,023,204 teaches to impregnate and foam polystyrene using carbon dioxide, nitrogen, sulfur hexafluoride, and the like.

U.S. Patent 2,531,665 teaches to impregnate polymers at 100-125°C with inert gas under pressure followed by cooling and reheating in a mold to bring about expansion.

U.S. Patent 2,848,427 teaches to impregnate polystyrene crosslinked with 0.01-0.25% DVB with $CO_2$ under pressure at a temperature below the Tg until at least 2% $CO_2$ was absorbed.

U.S. Patent 3,243,485 teaches to impregnate films or sheet of polystyrene in dry ice.

U.S Patent 4,695,621 teaches to purify polymers with supercritical carbon dioxide.

U.S. Patent 4,703,105 teaches to extract residual acrylonitrile and other low molecular weight compounds from ABS and styrene-acrylonitrile copolymers.

U.S. Patent 4,911,869 teaches to mold low density foam articles by re-impregnating the expanded particles with carbon dioxide or any other pneumatogen.

U.S. Patent 4,925,606 teaches to further expand extruded foam sheet by impregnating the expanded sheet with carbon dioxide.

DE 3,323,940 teaches a method of purifying poly (methacrylamide) by extracting the polymer with supercritical carbon dioxide or sulfur hexafluoride.

European Patent Publication 0,183,314 teaches to purify acrylonitrile-containing copolymers by extraction of acrylonitrile, styrene, alpha-methylstyrene, and other impurities with carbon dioxide or ethylene at critical or supercritical temperature and pressure.

European Patent Publication 0,281,464 teaches to purify styrene-vinylpyridine copolymers by extraction with supercritical carbon dioxide.

No one of the cited references teaches to extract and impregnate the polymers in one strep. Also, no one has previously taught how to combine this step with expansion and molding.

## BRIEF SUMMARY OF THE INVENTION:

We have now found that by combining the steps of impregnation, purification and foaming into a single process a foamed article can be produced which contains extremely low amounts of residual blowing agent and even no residual blowing agent and very little organic residues from the polymer.

According to the present invention, there is provided a process for producing foamed polymer molding comprising the steps of

(a) continuously extracting polymer particles in a pressure vessel with a fluid at liquid or supercritical conditions to remove low molecular weight compounds while impregnating the polymer particles with the extracting fluid;

(b) recovering the purified, impregnated polymer particles from the pressure vessel;

(c) pre-expanding these particles at a temperature above the glass transition temperature of the polymer-fluid blend (i.e. above the glass transition temperature of the polymer impregnated with the extractant fluid); and

(d) forming a molding from said reimpregnated expanded particles.

In the process of the invention, a material that is also capable of being used as a pneumatogen, or blowing agent, for the expansion of polymer particles, is used as extractant. Step (a) is operated under conditions such that the polymer becomes impregnated with extractant and the extractant in the purified polymer particles obtained from step (a) is employed to pre-expand the particles to form the pre-puff which undergoes further expansion in the molding step where the pre-expanded particles are expanded and fused to form the molded products, usually under the influence of heat.

2

While any suitable fluid which is capable of extracting low molecular weight material such as organic residues, e.g. residual unpolymerised monomer, from the polymer and of acting as a pneumatogen may be employed, the preferred fluid is carbon dioxide, especially when used under supercritical conditions in the pressure vessel.

The extractant fluid recovered from the pressure vessel will contain material, mainly organic residues such as in the form of low molecular weight compounds e.g. residual unpolymerised monomer, extracted from the polymer particles. The extractant fluid recovered from the pressure vessel may be treated to remove this material and then recycled to the pressure vessel. Such removal may conveniently be effected, for example, by condensation.

In an embodiment of this invention which is particularly preferred where the extractant is carbon dixoide, nitrogen or air, the pre-expanded particles are re-impregnated with pneumatogen prior to the final molding step. The preferred pneumatogen for use in the re-impregnation is air, nitrogen or, especially, carbon dioxide, particularly solid carbon dioxide.

The polymer particles suitable for the process may be polystyrene, styrene copolymers, polyphenylene oxide, polystyrene-polyphenylene oxide blends, polyoxymethylene, polymethyl methacrylate, methyl methacrylate copolymers, polyethylene, polypropylene, ethylene-propylene copolymers, polyvinyl chloride, cross-linked variations thereof, rubber-modified variations thereof and interpenetrating networks thereof. Any polymer or combination of polymers that absorbs 2-20% of inert bowing agent or extraction fluid would be suitable for this process. Particularly suitable copolymers of styrene are those copolymers with from 5 to 35 mole percent of maleic anhydride and its derivatives such as the imide, N-alkylimide, N-phenylimide, esters, half acids and half esters. Other suitable copolymers are styrene-acrylonitrile, acrylonitrile-butadiene-styrene, styrene-methyl methacrylate, styrene-methacrylic acid, styrene-acrylic acid and the rubber modified high impact styrene copolymers.

The inert blowing agents employed as extractants may be gas or liquid carbon dioxide, nitrogen, air and other pneumatogens. As is known, when these agents are used as blowing agents for the named polymers, the agent tends to escape exceedingly fast from the polymer particles at room temperature and atmopheric pressure. It is therefore necessary to impregnate and extract the particles in pressure equipment capable of containing supercritical fluids, high pressure gases or pressure gases or pressurized and/or chilled liquids. The critical temperature and pressure for carbon dioxide are 31°C and 73 bars respectively.

In the process of the invention, the polymer particles are placed in a pressure vessel, and extracted and impregnated with fluid at liquid or supercritical conditions. The fluid is recovered from the vessel and the extracts may then be removed from the fluid e.g. by use of a recovery chamber where the fluid is vented to a condenser. The fluid may then be returned to the pressure vessel. The purified, impregnated polymer is headed to pre-expand the polymer and the pre-expanded polymer is then foamed in a mold. In a preferred embodiment, the pre-expanded polymer is reimpregnated with inert pneumatogen before being molded and foamed. The foamed product is an extremely pure polymer article, compared to products molded by the ordinary process. Especially in the case where carbon dioxide is the extracting fluid and the blowing agent for the reimpregnation step, the product has no, or substantially no, residual blowing agent, minimal residual organic impurities from the polymer, and is, therefore, exceptionally useful in food containers and in drinking cups.

The use of these purifying fluids eliminates the objections encountered when the organic hydrocarbon blowing agents are used in certain geographic areas. Thus, no toxic fumes are given off during the molding cycles. Further, there are no residual vapors given off by the moldings after removal from the mold. Although not completely satistactory, combinations of hydrocarbon and $CO_2$ may also be used.

The following examples are meant to further illustrate the invention, but not to limit the claims.

EXAMPLE I

Two hundred fourteen grams of polystyrene beads (0.4 mm diameter) were placed in an extractor-impregnator capable of withstanding pressures of supercritical carbon dioxide at temperatures of at least 50°C. Carbon dioxide was continuously added at the desired temperature and pressure for the desired times. The carbon dioxide containing the extracted material was separated from the material and vented to the air, although it could have been reclaimed and recycled to the extractor-impregnator. The polystyrene was analyzed before and after extraction for volatile organic compounds.

The results are shown in Table I.

Table I.  Purification of Polystyrene Beads with Supercritical CO$_2$

| Residual Low Molecular Weight Organic Compound | Residual Low MW Compound before Purification (ppm) | Residual Low MW Cpd. (ppm) after Purification with | |
|---|---|---|---|
| | | Liquid CO$_2$ | Supercritical CO$_2$ |
| A | 20 | 16 | < 1 |
| B | 7 | < 5 | < 1 |
| C | 125 | 90 | < 1 |
| D | 10 | 18 | < 1 |
| E | 17 | 27 | < 1 |
| F | 546 | 372 | < 1 |
| G | 265 | 289 | < 1 |

Liquid CO$_2$ conditions:  1160 psig. room temperature. 135 min.
Supercritical CO$_2$ conditions:  4335 psig. 50 °C. 324 min.
The CO$_2$ content of the beads was 8.2% following extraction with liquid CO$_2$, and 4-12% following extraction with supercritical CO$_2$.

Beads containing similar levels of carbon dioxide were expanded in a steam autoclave (20 psig external and 25 psig internal) for 5-10 sec. The resultant density of 6-7 pcf.

This pre-puff was molded into cups with and without an intermediate re-impregnation treatment. The fusion of the resultant molded articles was rated and recorded in Table II.

TABLE II

| Reimpregnation Treatment | Fusion |
|---|---|
| None | Poor |
| 1 Day in dry ice | Good |
| 1 Day in air (30psig) | Good |

It can be seen from the data in Table II that when the beads were pre-puffed, the CO$_2$ was completely dissipated and the moldings were not fused. Reimpregnation of the pre-expanded beads allowed the reimpregnated beads to be molded into parts having reasonable fusion of the beads. The use of air and dry ice for the reimpregnation are illustrated.

EXEMPLE II

Other polymers were similarly impregnated with or without extraction using carbon dioxide (4-12 wt-% CO$_2$). These products were pre-expanded in appropriate fluids (i.e. steam, hot glycerine, etc.) and molded after re-impregnation in air (30-300 psig, 2-70 hrs.). Foam densities of these products are shown in Table III.

## TABLE III

| Polymer | Density, pcf. |
|---|---|
| Polystyrene #1 | 3.0 |
| Polystyrene #2 | 2.0 |
| Polystyrene #3 | 6.0 |
| X-linked polystyrene | 6.0 |
| Modified polystyrene | 1.8 |
| Plasticized polystyrene | 1.6 |
| Styrene/maleic anhydride copolymer | 5.0 |
| Styrene/acrylonitrile copolymer | 5.3 |

**Claims**

1. A process for producing a foamed polymer molding comprising the steps of
   (a) continuously extracting polymer particles in a pressure vessel with a fluid at liquid or supercritical conditions to remove low molecular weight compounds while impregnating the polymer particles with the extracting fluid;
   (b) recovering the purified, impregnated polymer particles from the pressure vessel;
   (c) pre-expanding these particles at a temperature above the glass transition temperature of the polymer-fluid blend; and
   (d) forming a molding from said pre-expanded particles with the use of heat.

2. A process as claimed in claim 1 in which the pre-expanded particles are reimpregnated with solid carbon dioxide, air, nitrogen or other pneumatogen prior to forming the molding.

3. A process as claimed in claim 2 wherein the reimpregnation is accomplished with a mixture of carbon dioxide and a minor amount of a hydrocarbon blowing agent, with or without halogen substituents.

4. A process as claimed in any one of claims 1 to 3 wherein the extracting fluid exiting the pressure vessel is recycled to the pressure vessel.

5. A process as claimed in claim 4 wherein the extractant fluid recovered from the pressure vessel and containing material extracted from the polymer particles is treated to remove said extracted material prior to being recycled to the pressure vessel.

6. A process as claimed in claim 5 wherein said extracted material is removed by condensation.

7. A process as claimed in any one of claims 1 to 6 wherein the extracting fluid is supercritical carbon dioxide.

8. A process as claimed in any one of claims 1 to 7 wherein the polymer is selected from polystyrene; copolymers of styrene and 5 to 35 mole-% of at least one other monomer selected from maleic anhydride, maleimide, N-alkylmaleimide, N-phenylmaleimide, esters and half esters of maleic acid, and mixtures thereof;
   styrene-acrylonitrile copolymers; acrylonitrile-butadiene-styrene copolymers; styrene-methyl methacrylate copolymers;
   styrene-methacrylic acid copolymers; styrene-acrylic acid copolymer; high impact rubber modified polystyrene; polymethyl methacrylate; polyvinyl chloride; polyoxymethylene; polyhenylene oxide; and polymers of ethylene, propylene or mixtures thereof.

9. A process as claimed in any one of claims 1 to 8 wherein the polymer is crosslinked.

10. A process as claimed in any one of claims 1 to 9 wherein the polymer is a blend of two or more polymers.

11. A process as claimed in claim 10 wherein the polymer is a blend of polystyrene and polyphenylene oxide.

12. A foamed drinking cup or food container obtained by the process claimed in any one of claims 1 to 11.

13. A foamed article comprising a drinking cup or food container made by molding pre-expanded plastics particles, said article being substantially free of residual blowing agent and containing less low molecular weight compound than the unfoamed plastics particles employed to form the pre-expanded particles.